# EUROPÄISCHE PATENTSCHRIFT

(11) **EP 2 428 669 B1**
(45) Veröffentlichungstag und Bekanntmachung des Hinweises auf die Patenterteilung: **23.03.2016**
(21) Anmeldenummer: 11171487.9
(22) Anmeldetag: 27.06.2011
(51) Int. Cl.: F02D 41/02, B60W 30/18, F01N 9/00

(54) **Landwirtschaftliche Maschine**
Agricultural machine
Machine agricole

(30) Priorität: 10.09.2010 DE 102010044978
(43) Veröffentlichungstag der Anmeldung: 14.03.2012
(73) Patentinhaber: CLAAS Selbstfahrende Erntemaschinen GmbH, 33428 Harsewinkel (DE)
(72) Erfinder: Renneke, Elmar, 33129 Delbrück (DE); Brandhofe, Kai, 48155 Münster (DE)

(56) Entgegenhaltungen:
- EP-A1- 2 175 110
- DE-A1-102008 025 569
- DE-A1-102009 050 831
- GB-A- 2 393 404
- US-A1- 2005 166 580
- US-A1- 2010 031 638

## Beschreibung

Die vorliegende Erfindung betrifft eine landwirtschaftliche Maschine mit einem Verbrennungsmotor, einem in einem Abgasstrang des Verbrennungsmotors angeordneten Partikelfilter und einer Motorsteuereinheit, die eingerichtet ist, bei Bedarf eine Regeneration des Partikelfilters durchzuführen.

Die Patentschrift DE 10 2009 050 831 offenbart ein Fahrzeug mit einem als Dieselmotor ausgeführten Verbrennungsmotor, welcher einen im Abgasstrang angeordneten Partikelfilter aufweist. Dieser Partikelfilter bedarf der regelmäßigen Regeneration, welche mittels eines Regenerationssteuermoduls ausgelöst wird. Ein Deaktivierungsmodul dient dazu, basierend auf einer mittels eines satellitengestützten Ortungssystems bestimmten Position das Regenerationsmodul zu deaktivieren.

Es ist an sich bekannt, Partikelfilter zum Abfangen von Rußpartikeln einzusetzen, die von einem Dieselmotor im Betrieb emittiert werden. Die Rußpartikel lagern sich in Kapillaren des Filters ab, mit der Folge, dass im Laufe des Betriebs der Druckabfall am Filter zunimmt und der Filter im Extremfall verstopfen kann. Um eine solche Verstopfung zu vermeiden, ist es erforderlich, den Filter von Zeit zu Zeit zu regenerieren, indem die darin abgelagerten Rußpartikel verbrannt werden. Um den Ruß zum Abbrennen zu bringen, muss der Filter stark erhitzt werden. Ein bekannter Ansatz hierfür ist, den Motor bei Leerlaufdrehzahl, d.h. bei niedrigem Luftdurchsatz, zu betreiben, und die Kraftstoffeinspritzung in den Motor so zu manipulieren, dass heiße Abgase erhalten werden. Eine solche Manipulation kann zum Beispiel darin bestehen, dass der Einspritzzeitpunkt des Kraftstoffs verzögert und die Einspritzmenge erhöht wird, oder dass der Kraftstoff in mehreren Schüben pro Arbeitszyklus eingespritzt wird. Der spät eingespritzte Kraftstoff trägt nur wenig zur Antriebsleistung bei, ein großer Teil der durch seine Verbrennung erhaltenen Energie entweicht aus dem Motor in Form von heißem Abgas, mit dem der Filter auf Regenerationstemperatur gebracht wird.

Die auf diese Weise in den Filter gelangte Heizleistung muss exakt auf den Abgasdurchsatz des Filters abgestimmt sein, denn der Temperaturbereich, in dem die Regeneration ablaufen kann, ist schmal. Bei einer zu niedrigen Temperatur kommt die Verbrennung des Rußes nicht in Gang; ist die zugeführte Heizleistung zu hoch, so kann die Verbrennung so schnell ablaufen, dass die dabei freigesetzte Wärme den Filter schädigt.

Durch den Betrieb bei Leerlaufdrehzahl ist der Abgasdurchsatz exakt vorgegeben und auf einen niedrigen Wert beschränkt, so dass eine relativ geringe Menge an Kraftstoff ausreicht, um das Abgas auf die erforderliche Temperatur zu bringen. Erhöht sich die Drehzahl, ohne dass die eingespritzte Kraftstoffmenge angepasst wird, so nimmt die Abgastemperatur ab, der Filter kühlt sich ab, und die Regenerierung kommt zum Erliegen. Eine herkömmliche Motorsteuereinheit reagiert hierauf durch einen Abbruch der Regeneration. Eine unvollständige Regeneration führt zu einer ungleichmäßigen Rußverteilung im Filter. Die Rußmenge im Filter kann dann anhand des Druckabfalls am Filter nicht mehr zuverlässig beurteilt werden, und es kann, wenn der Motor nicht vorher rechtzeitig automatisch ausgeschaltet wird, zu Filterschäden kommen, weil der Druckabfall sich auf einzelne, stark rußbelastete Teile des Filters konzentriert, oder weil eine lokal dicke Rußschicht bei einer späteren Regeneration so viel Hitze freisetzt, dass der Filter beschädigt wird.

Der Benutzer einer solchen herkömmlichen Maschine ist daher in der Praxis gezwungen, die Benutzung der Maschine jedes Mal, wenn der Filter regeneriert werden muss, zu unterbrechen. Eine solche Arbeitsunterbrechung kann, wenn sie zu einem ungünstigen Zeitpunkt erfolgt, erhebliche wirtschaftliche Einbußen nach sich ziehen. Insbesondere wenn mehrere Maschinen bei der Bearbeitung einer Aufgabe zusammenarbeiten, zum Beispiel Ernte- und Transportmaschinen beim Abernten eines Feldes, wirkt sich eine Betriebsunterbrechung einer Maschine auch auf die anderen aus, wodurch sich die wirtschaftlichen Auswirkungen vervielfachen können.

Aufgabe der vorliegenden Erfindung ist, eine landwirtschaftliche Maschine zu schaffen, die es erlaubt, derartige Betriebsunterbrechungen zu minimieren.

Die Aufgabe wird zum einen gelöst, indem bei einer landwirtschaftlichen Maschine mit einem Verbrennungsmotor, einen im Abgasstrang des Verbrennungsmotors angeordneten Partikelfilter und einer Motorsteuereinheit, die eingerichtet ist, in einer Regenerationsphase eine Wärmequelle so zu steuern, dass im Partikelfilter eine zu dessen Regeneration erforderliche Temperatur erreicht wird, und eine laufende Regeneration abzubrechen, wenn wenigstens ein die Regeneration beeinflussender Betriebsparameter der Maschine von einem Sollwert abweicht, die Maschine eine Steuervorrichtung umfasst, die eingerichtet ist, eine Zeitspanne vorherzusagen, in der es voraussichtlich möglich, d.h. insbesondere mit den Anforderungen an die Nutzung der Maschine vereinbar, ist, den Betriebsparameter auf seinem Sollwert zu halten, und mit Beginn dieser Zeitspanne eine Regeneration zu starten. Dies ermöglicht eine Durchführung der Regeneration, ohne dass dafür die Nutzung der Maschine unterbrochen werden muss.

Eine bevorzugte Wärmequelle ist der Verbrennungsmotor selber. Die Steuereinheit ist dann zweckmäßigerweise eine Motorsteuereinheit.

Wenn der Sollwert jeweils zu Beginn einer Regeneration festlegbar ist, dann erleichtert dies das Finden einer für die Durchführung der Regeneration geeigneten Zeitspanne, denn diese muss sich dann lediglich durch eine voraussichtliche Konstanz des Betriebsparameters auszeichnen, nicht aber noch zusätzlich durch einen bestimmten Wert des Betriebsparameters.

Im Falle einer selbstfahrenden landwirtschaftlichen Maschine ist eine gute Möglichkeit, eine voraussichtlich für eine Regeneration geeignete Zeitspanne vorherzusagen, die Steuervorrichtung an einen Routenplaner zu koppeln, um von dort Informationen über mit der Maschine geplante Arbeiten zu beziehen.

Diese Informationen sollten vorzugsweise auf einem zu befahrenden Weg zu verrichtende Arbeit und die auf dem Weg zu fahrende Geschwindigkeit betreffen. Anhand dieser Informationen kann die Steuervorrichtung den voaussichtlichen zukünftigen Leistungsbedarf der Maschine abschätzen und beurteilen, ob dieser mit dem während der Regeneration konstant zu haltenden Parameter kompatibel ist oder den Wert, auf dem der Parameter konstant zu halten ist, passend zum voraussichtlichen Leistungsbedarf der Maschine festlegen.

Als ein weiteres, alternatives oder - vorzugsweise mit dem obigen kombiniertes - Kriterium für die Vorhersage einer geeigneten Regenerationszeitspanne kann eine von der Steuervorrichtung überwachte Ressource der Maschine herangezogen werden. Wenn die Menge der Ressource nicht ausreicht, um einen Betrieb der Maschine während der für eine Regeneration erforderlichen Zeit zu ermöglichen, kann eine für die Regeneration geeignete Zeitspanne nicht vorhergesagt werden. Ist die Ressource in ausreichender Menge vorhanden, dann ist es zumindest nicht ausgeschlossen, eine Regeneration zu versuchen.

Als Ressource kommen insbesondere ein Vorrat eines Betriebsmittels oder das Fassungsvermögen eines Erntegutbehälters der Maschine in Betracht.

Der konstant zu haltende Betriebsparameter kann insbesondere mit der Motorlast und/oder -drehzahl zusammenhängen.

Um eine energieeffiziente Regeneration zu ermöglichen, kann die Steuervorrichtung eingerichtet sein, bei der Auswahl einer Zeitspanne für die Durchführung der Regeneration die Temperatur des Filters zu berücksichtigen.

Um die Notwendigkeit, den Betriebsparameter konstant zu halten, mit einem eventuell variierenden Leistungsbedarf der Maschine zu vereinbaren, kann es zweckmäßig sein, wenn die Steuervorrichtung in der Lage ist, in der Regenerationsphase die Leistung des Verbrennungsmotors zwischen einem ersten und einem zweiten Verbraucher der Maschine zu verteilen. So kann insbesondere, wenn die Motorsteuereinheit während der Regeneration eine feste Ausgangsleistung des Motors vorgibt, die Leistung, die wenigstens einem der beiden Verbraucher zugeführt wird, exakt an dessen - möglicherweise kurzfristig veränderlichen - Bedarf angepasst werden, wohingegen der zweite Verbraucher - ggf. über seinen wirtschaftlich oder technisch notwendigen Bedarf hinaus - diejenige Leistung zu dissipieren hat, die der erste Verbraucher nicht aufnehmen kann.

Ein solcher Ansatz ist insbesondere dann zweckmäßig, wenn der erste Verbraucher ein Fahrantrieb ist, dessen Leistungsaufnahme in direktem Zusammenhang mit der Geschwindigkeit steht, mit der sich die Maschine fortbewegt. Diese Geschwindigkeit muss offensichtlich kurzfristig veränderbar sein, um eine Gefährdung der Maschine, ihres Benutzers oder anderer Personen und Sachen zu vermeiden. Leistung, die der Fahrantrieb bei durch äußere Umstände erzwungener Langsamfahrt nicht abnehmen kann, kann durch schnelleren Lauf eines zweiten Verbrauchers, etwa eines Mäh-, Dresch- oder Häckselwerks, dissipiert werden. Insbesondere im Falle eines Häckselwerks ist die Leistungsaufnahme besonders gut willkürlich steuerbar, nämlich durch Variieren der Schnittlänge.

Da die Leistung, die ein solcher zweiter Verbraucher zum wirtschaftlich oder technisch sinnvollen Funktionieren benötigt, proportional zur von der Maschine aufgenommenen Erntegutmenge und infolgedessen proportional zu ihrer Geschwindigkeit ist, ist eine ideal ökonomische Nutzung der vom Verbrennungsmotor während der Regeneration bereitgestellten Leistung möglich, wenn diese entsprechend der Proportionalität des Bedarfs an das Fahrwerk und den zweiten Verbraucher verteilt wird. Die Maschine bewegt sich dann mit der höchsten Geschwindigkeit, die mit der verfügbaren Motorleistung und dem Leistungsbedarf des zweiten Verbrauchers vereinbar ist. Falls aus irgendeinem Grund diese höchstmögliche Geschwindigkeit nicht gefahren werden soll, und die vom Fahrwerk aufgenommene Leistung dementsprechend geringer ist, wird die vom Fahrwerk nicht benötigte Leistung dem zweiten Verbraucher zugeschlagen.

Als zweiter Verbraucher kann auch ein parasitärer Verbraucher eingesetzt werden, dessen Aufgabe im wesentlichen nur darin besteht, überschüssige Leistung des Motors zu dissipieren, um trotz wechselnden Leistungsbedarfs der Maschine einen Betrieb des Motors unter stationären Bedingungen zu ermöglichen. Als parasitärer Verbraucher kommt z.B. ein

Überströmventil in einem von dem Motor angetriebenen Hydraulikkreis in Betracht.

Da die Dichte des Ernteguts auf dem Feld variabel ist, sollte zweckmäßigerweise auch die Proportionalität, nach der die Leistung auf das Fahrwerk und den zweiten Verbraucher aufgeteilt wird, variabel sein.

Mittel zum Bestimmen der Proportionalität während des Betriebs sind zweckmäßigerweise an Bord der Maschine vorhanden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines selbstfahrenden Feldhäckslers als Ausführungsbeispiel einer erfindungsgemäßen Maschine; und
- Fig. 2: ein Blockdiagramm des Antriebssystems des Feldhäckslers.

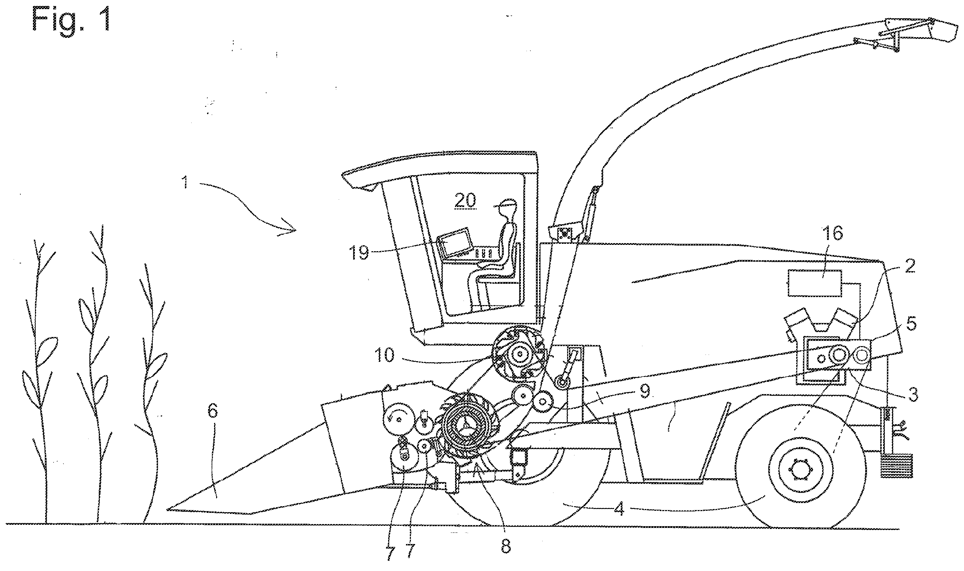

Fig. 1 ist eine schematische Darstellung eines von einem Dieselmotor 2 angetriebenen Feldhäckslers 1. Die Erfindung ist auch anwendbar auf andere selbstfahrende landwirtschaftliche Maschinen wie etwa Ballenpressen, Mähdrescher etc., doch da sich die erfindungsspezifischen Merkmale dieser verschiedenen Maschinentypen nicht wesentlich unterscheiden, genügt es, sie am Beispiel eines spezifischen Maschinentyps zu erläutern.

Eine solche Maschine 1 umfasst eine Vielzahl von mit dem Dieselmotor 2 verbundenen und die von ihm gelieferte Antriebsenergie verbrauchenden Komponenten. Im Rahmen der vorliegenden Erfindung können diese Komponenten vereinfachend zusammengefasst werden zu einem ersten Verbraucher 3, der im Wesentlichen einen Fahrantrieb mit Rädern 4 umfasst, und einem zweiten Verbraucher 5, der für die Verarbeitung von von der Maschine aufgenommenem Erntegut angetriebene Komponenten wie etwa ein Schneidwerk 6, Paare von Walzen 7 zum Fördern und Verdichten des geschnittenen Ernteguts, eine Häckseltrommel 8, Konditionierwalzen 9 und einen Nachbeschleuniger 10 umfasst.

Die Antriebsleistung des Dieselmotors 2 wird an die beiden Verbraucher 3, 5 über ein Verteilergetriebe 11 verteilt. Das Verteilergetriebe 11 hat zwei Antriebswellen 12, 13 zum Antreiben des ersten bzw. zweiten Verbrauchers 3, 5, deren Drehzahlverhältnis zueinander verstellbar ist, um die Leistung des Motors 2 in einem gewünschten Verhältnis an die zwei Verbraucher 3, 5 zu verteilen.

Um die Leistungsaufnahme des Verbrauchers 5 bei gleichbleibender Geschwindigkeit der Maschine und konstantem Erntegutdurchsatz variieren zu können, kann insbesondere die Geschwindigkeit der Häckseltrommel variabel sein. Je schneller diese (bei gleichbleibender Geschwindigkeit der das Erntegut fördernden Walzen 7) läuft, um so feiner wird das Erntegut gehäckselt, d.h. um so größer ist die zum Verarbeiten eines Erntegutstroms von gegebener Stärke benötigte Leistung.

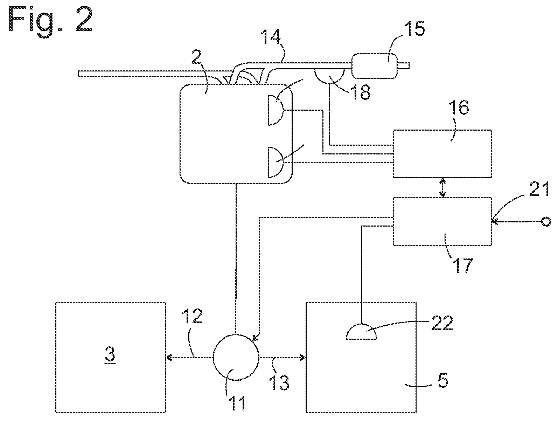

Wie in Fig. 2 gezeigt, ist in einer Abgasleitung 14 des Dieselmotors 2 ein Partikelfilter 15 angeordnet, um im Abgas des Dieselmotors 2 enthaltene Rußpartikel abzufangen. Eine elektronische Motorsteuereinheit 16 steuert die Kraftstoffeinspritzung in den Motor 2 entsprechend einem von einer höherrangigen Steuereinheit 17 vorgegebenen Sollwert eines Betriebsparameters des Motors 2 wie etwa Drehzahl, Drehmoment, Ausgangsleistung oder dergleichen. Die Motorsteuereinheit 16 ist hier mit einem an der Abgasleitung 14 zwischen dem Motor 2 und dem Partikelfilter 15 angeordneten Drucksensor 18 verbunden, um anhand eines in der Abgasleitung 14 stromaufwärts vom Partikelfilter auftretenden Überdrucks die Menge des in dem Filter 15 gespeicherten Rußes abzuschätzen und anhand dieses Schätzwerts über die Notwendigkeit einer Regeneration des Partikelfilters 15 zu entscheiden bzw. die Restbetriebszeit abzuschätzen, die noch zu Verfügung steht, bis voraussichtlich eine Regeneration des Filters 15 erforderlich wird.

In der Steuereinheit 17 ist ein Einsatzplan des Feldhäckslers gespeichert, den diese zuvor von einem externen Routenplaner empfangen hat. Indem der Routenplaner solche Einsatzpläne für alle an einem Einsatz beteiligten Maschinen, z.B. für am Abernten eines oder mehrerer Felder beteiligte Feldhäcksler und Transportfahrzeuge für das Erntegut, koordiniert erstellt, ist ein hoher Grad an Effizienz und Wirtschaftlichkeit erreichbar. Die Steuereinheit 17 kann anhand des Einsatzplans jederzeit abschätzen, wie der als nächstes zu befahrende Weg beschaffen ist, insbesondere ob er auf einer Straße oder im Erntebetrieb auf einem Feld zurückzulegen ist. In letzterem Fall schätzt sie die zum Zurücklegen des im Erntebetrieb zu befahrenden Weges noch benötigte Zeit ab, und wenn diese länger ist als die für eine Regeneration des Filters 15 benötigte Zeitspanne, und wenn in dieser Zeitspanne auch nicht mit der Erschöpfung eines Betriebsmittels wie etwa Treibstoff zu rechnen ist, zu dessen Erneuerung eine Betriebsunterbrechung nötig ist, dann ist der gegenwärtige Zeitpunkt geeignet, um eine Regeneration zu beginnen. Andere zu überwachende Betriebsmittel, deren bevorstehende Erschöpfung eine Regeneration bei laufendem Betrieb vereiteln kann, sind z.B. im Falle einer Ballenpresse der Vorrat an Bindegarn oder an Wickelfolie, und im Falle eines Mähdreschers das Aufnahmevermögen seines Korntanks.

Wenn die Steuereinheit 17 anhand des Einsatzplans erkennt, dass gegen Ende der von der Motorsteuereinheit 16 gemeldeten Restbetriebszeit des Filters 15 ein zum Beginnen einer Regeneration geeigneter Zeitpunkt vorhanden ist, dann startet sie zu diesem Zeitpunkt die Regeneration. Eine entsprechende Nachricht wird an eine Anzeige 19 in der Fahrerkabine 20 des Feldhäckslers 1 geschickt, damit der Fahrer Bescheid weiß, weshalb der Feldhäcksler 1 nun auf eine Eingabe des Fahrers, insbesondere auf eine Fahrpedalbetätigung, möglicherweise anders reagiert als bei normalem Betrieb, ohne laufende Regeneration, und um ihn zu veranlassen, Eingaben wie etwa ein Ausschalten des Motors zu vermeiden, die mit der Regeneration nicht kompatibel sind.

Bei der Entscheidung, ob das Ende der Restbetriebszeit des Filters 15 "nah" ist, kann die Temperatur des Filters berücksichtigt werden. Ist diese hoch, weil die Maschine bereits lange Zeit bei hoher Last gearbeitet hat, dann kann die Frage großzügiger bejaht werden als bei kaltem Filter, weil in diesem Fall die Energiemenge, die benötigt wird, um den Filter 15 auf die Regenerationstemperatur zu bringen, gering ist.

Eine Regeneration ist grundsätzlich bei unterschiedlichen stationären Drehzahlen und/oder Motorlasten durchführbar, allerdings ist die Menge des für die Regeneration zusätzlich einzuspritzenden Kraftstoffs und eventuell auch die zeitliche Verteilung der Einspritzung für verschiedene Werte von Drehzahl und/oder Leistung unterschiedlich. Wenn sich Drehzahl und/oder Leistung während der Regeneration ändern, und Kraftstoffdosierung und -einspritzung nicht mit der jeweils richtigen Verzögerung oder gar im Vorhinein angepasst werden, besteht die Gefahr einer den Filter 15 schädigenden Überhitzung oder einer Unterkühlung, die eine bereits laufende Verbrennung des Rußes im Filter 15 zum Erliegen bringt. Um die Überhitzungsgefahr zu beseitigen, ist die Motorsteuereinheit 16 eingerichtet, eine Regeneration abzubrechen, wenn in ihrem Verlauf die Drehzahl und/oder die Leistung zu stark schwankt.

Einer bevorzugten Weiterbildung zufolge ist die Motorsteuereinheit 16 ferner eingerichtet, während einer Regeneration eine Eingabe des Fahrers, die geeignet ist, die Drehzahl und/oder die Leistung zu beeinflussen, wie etwa eine Fahrpedalbetätigung, auf ihr Ausmaß zu überprüfen und zu ignorieren, wenn dieses Ausmaß eine Signifikanzschwelle nicht übersteigt, und dadurch Schwankungen von Drehzahl und/oder Leistung weiter einzuschränken.

Die Steuereinheit 17 schätzt anhand der Informationen des Einsatzplans einen mittleren Leistungsbedarf des Feldhäckslers während der Regeneration ab und legt anhand dieser Abschätzung Sollwerte der Drehzahl und/oder Leistung des Motors 2 während der Regeneration fest.

Um den Filter 15 ordnungsgemäß zu regenerieren, muss der Motor 2 mit dieser vorgegebenen Drehzahl oder Leistung im Wesentlichen kontinuierlich laufen, solange die Regenerierung andauert. Mit Hilfe eines Tachometers und eines an beliebiger geeigneter Stelle des zweiten Verbrauchers 5, zum Beispiel an den Walzen 7, 8 oder dem Nachbeschleuniger 11, angeordneten Erntegutsensors 22 ist die Steuereinheit 17 in der Lage, die Dichte des Ernteguts auf dem Feld abzuschätzen. Aus dieser Dichte ermittelt die Steuereinheit 17 ein Verhältnis zwischen der zum Bewegen des Feldhäckslers 1 erforderlichen Leistung und der Leistung, die der zweite Verbraucher 5 benötigt, um das durch diese Bewegung des Feldhäckslers eingewonnene Erntegut zu verarbeiten. Die Steuereinheit 17 hält, solange sie am Eingang 21 keine gegenteiligen Befehle vom Fahrer empfängt, den Motor bei der vorgegebenen Drehzahl oder Leistung und regelt die Leistungsverteilung im Verteilergetriebe 11 entsprechend dem oben erwähnten Verhältnis. Wenn die Steuereinheit 17 am Eingang 21 einen Befehl des Fahrers empfängt, die Fahrt zu verlangsamen, zum Beispiel für ein Wendemanöver im Vorgewende, dann wird eine solche Verlangsamung durch Verstellung des Verteilergetriebes 11 erreicht, d.h. in dem Maße, in dem sich die Bewegung des Feldhäckslers 1 verlangsamt, beschleunigt sich die des zweiten Verbrauchers 5. Da im Vorgewende kein Erntegut anfällt, hat ein solcher beschleunigter Lauf auf die Qualität des verarbeiteten Ernteguts keinen Einfluss.

Wie eingangs gesagt, ist die vorliegende Erfindung auch auf einen Mähdrescher anwendbar. Allerdings ist es bei einem Mähdrescher nicht möglich, die zum Antreiben des Dreschwerks eingesetzte Leistung beliebig zu variieren, da eine schlechte Anpassung der Dreschwerkleistung an die Fahrgeschwindigkeit bzw. den mit der Fahrgeschwindigkeit verknüpften Erntegutdurchsatz zu unbefriedigenden Dreschergebnissen führt. Hier ist es daher zweckmäßiger, Fahrantrieb und Dreschwerk gemeinsam als ersten Verbraucher aufzufassen und als einen zweiten Verbrauchern zum Dissipieren überschüssiger Motorleistung während einer Regeneration ein den Motor kühlendes Gebläse einzusetzen. Die Drehzahl dieses Gebläses kann weit über einen für die Kühlung des Motors technisch notwendigen Wert hinaus erhöht werden, ohne die Funktion des Mähdreschers zu beeinträchtigen. Alternativ oder ergänzend kann als zweiter Verbraucher ein Überströmventil mit steuerbarer Durchlassrate vorgesehen werden, das Fluid aus einem Hydraulikkreis, z.B. eines hydrostatischen Antriebs, abzweigt.

Bei der obigen Beschreibung wurde davon ausgegangen, dass zum Aufheizen des Partikelfilters 15 für die Regeneration die Kraftstoffeinspritzung am Motor 2 durch die Motorsteuereinheit 16 manipuliert wird. Die vorliegende Erfindung ist jedoch von der Art und Weise, wie der Filter aufgeheizt wird, unabhängig und insbesondere auch auf eine landwirtschaftliche Maschine anwendbar, bei der eine elektrische Heizung oder Brenner, der aus demselben Kraftstofftank gespeist wird wie der Motor, zum Beheizen des Partikelfilters vorgesehen sind.

### Bezugszeichen

- 1: Maschine
- 2: Dieselmotor
- 3: 1. Verbraucher
- 4: Rad
- 5: 2. Verbraucher
- 6: Schneidwerk
- 7: Walze
- 8: Häckseltrommel
- 9: Konditionierwalze
- 10: Nachbeschleuniger
- 11: Verteilergetriebe
- 12: Antriebswelle
- 13: Antriebswelle
- 14: Abgasleitung
- 15: Partikelfilter
- 16: Motorsteuereinheit
- 17: höherrangige Steuereinheit
- 18: Drucksensor
- 19: Anzeige
- 20: Fahrerkabine
- 21: Eingang
- 22: Erntegutsensor

## Patentansprüche

1. Landwirtschaftliche Maschine (1) mit einem Verbrennungsmotor (2), einem in einem Abgasstrang (14) des Verbrennungsmotors (2) angeordneten Partikelfilter (15) und einer Steuereinheit (16), die eingerichtet ist, in einer Regenerationsphase eine Wärmequelle (2) so zu steuern, dass im Partikelfilter (15) eine zu dessen Regeneration erforderliche Temperatur erreicht wird, und eine laufende Regeneration abzubrechen, wenn wenigstens ein die Regeneration beeinflussender Betriebsparameter der Maschine (1) von einem Sollwert abweicht, **dadurch gekennzeichnet, dass** die Maschine (1) eine Steuervorrichtung (17) umfasst, die eingerichtet ist, eine Zeitspanne vorherzusagen, in der es voraussichtlich möglich ist, den Betriebsparameter auf seinem Sollwert zu halten, und mit Beginn dieser Zeitspanne eine Regeneration zu starten, wobei die Steuervorrichtung (17) an einen Routenplaner gekoppelt ist, um die Zeitspanne anhand von von dem Routenplaner empfangener Information über mit der Maschine geplante Arbeiten vorherzusagen.

2. Landwirtschaftliche Maschine nach Anspruch 1, **dadurch gekennzeichnet, dass** die Wärmequelle der Verbrennungsmotor (2) und die Steuereinheit (16) eine Motor-steuereinheit (16) ist

3. Landwirtschaftliche Maschine nach Anspruch 1 oder 2, **dadurch gekennzeichnet, dass** der Sollwert jeweils zu Beginn einer Regeneration festlegbar ist.

4. Landwirtschaftliche Maschine nach Anspruch 3, **dadurch gekennzeichnet, dass** die Steuervorrichtung (17) eingerichtet ist, von dem Routenplaner Informationen betreffend auf einem zu befahrenden Weg zu verrichtende Arbeit und die auf dem Weg zu fahrende Geschwindigkeit zu empfangen.

5. Landwirtschaftliche Maschine nach einem der vorhergehenden Ansprüche, **dadurch gekennzeichnet, dass** die Steuervorrichtung (17) eingerichtet ist, wenigstens eine Ressource der Maschine (1) zu überwachen und die Regeneration nur dann zu starten, wenn die verfügbare Menge der Ressource ausreicht, um die Maschine (1) während der für die Regeneration benötigten Zeitspanne zu betreiben.

6. Landwirtschaftliche Maschine nach Anspruch 5, **dadurch gekennzeichnet, dass** die Ressource ein Vorrat eines Betriebsmittels oder das Fassungsvermögen eines Erntegutbehälters ist.

7. Landwirtschaftliche Maschine nach einem der vorhergehenden Ansprüche, **dadurch gekennzeichnet, dass** der konstant zu haltende Betriebsparameter mit Motorlast und/oder -drehzahl zusammenhängt.

8. Landwirtschaftliche Maschine nach einem der vorhergehenden Ansprüche, **dadurch gekennzeichnet, dass** die Steuervorrichtung (17) eingerichtet ist, bei der Auswahl einer Zeitspanne für die Durchführung der Regeneration die Temperatur des Filters (15) zu berücksichtigen.

9. Landwirtschaftliche Maschine nach einem der vorhergehenden Ansprüche, **dadurch gekennzeichnet, dass** sie wenigstens einem ersten und einem zweiten von dem Verbrennungsmotor (2) angetriebenen Verbraucher (3, 5) aufweist und die Steuervorrichtung eingerichtet ist, die aus dem Konstanthalten des Betriebsparameters während der Regeneration resultierende Leistung des Verbrennungsmotors (2) zwischen den Verbrauchern (3, 5) der Maschine (1) zu verteilen.

10. Landwirtschaftliche Maschine nach Anspruch 9, **dadurch gekennzeichnet, dass** der erste Verbraucher (3) einen Fahrantrieb umfasst.

11. Landwirtschaftliche Maschine nach Anspruch 9 oder 10, **dadurch gekennzeichnet, dass** der zweite Verbraucher (5) ein den Motor (2) kühlendes Gebläse und/oder ein Überströmventil umfasst.

12. Landwirtschaftliche Maschine nach Anspruch 9, **dadurch gekennzeichnet, dass** die Steuervorrichtung eingerichtet ist, bei der Verteilung der Leistung auf den Fahrantrieb (3) und den zweiten Verbraucher (5) einerseits einen Fahrgeschwindigkeitswunsch und andererseits eine Proportionalität zwischen den vom Fahrantrieb (3) und dem zweiten Verbraucher (5) bei der gewünschten Geschwindigkeit benötigten Leistungen zu berücksichtigen, indem, wenn die zu verteilende Leistung wenigstens der Summe dieser benötigten Leistungen entspricht, dem Fahrwerk (3) die von ihm benötigte Leistung und dem zweiten Verbraucher (5) die restliche Leistung zugeführt wird, während, wenn die zu verteilende Leistung kleiner als diese Summe ist, dem Fahrwerk (3) und dem zweiten Verbraucher (5) jeweils der gleiche Bruchteil der von ihnen jeweils benötigten Leistungen zugeführt wird.

13. Landwirtschaftliche Maschine nach Anspruch 12, **dadurch gekennzeichnet, dass** die Proportionalität variabel ist.

14. Landwirtschaftliche Maschine nach Anspruch 12, **dadurch gekennzeichnet, dass** sie Mittel (22) zum Bestimmen der Proportionalität während des Betriebs aufweist.

## Claims

1. An agricultural machine (1) comprising an internal combustion engine (2), a particulate filter (15) arranged in an exhaust line (14) of the internal combustion engine (2) and a control unit (16) adapted in a regeneration phase to control a heat source (2) in such a way that a temperature required for regeneration of the particulate filter (15) is reached therein and to terminate an on-going regeneration operation if at least one operating parameter of the machine (1) that influences regeneration, deviates from a target value, **characterised in that** the machine (1) includes a control device (17) adapted to predict a period of time in which it is probably possible to hold the operating parameter at its target value and to start a regeneration operation with the beginning of that period of time, wherein the control device (17) is coupled to a route planner in order to predict the period of time on the basis of information received by the route planner about work planned with the machine.

2. An agricultural machine according to claim 1 **characterised in that** the heat source is the internal combustion engine (2) and the control unit (16) is an engine management unit (16).

3. An agricultural machine according to claim 1 or claim 2 **characterised in that** the target value can be respectively established at the beginning of a regeneration operation.

4. An agricultural machine according to claim 3 **characterised in that** the control device (17) is adapted to receive from the route planner information relating to work to be performed on a path to be travelled and the speed to be travelled on the path.

5. An agricultural machine according to one of the preceding claims **characterised in that** the control device (17) is adapted to monitor at least one resource of the machine (1) and to start regeneration only when the available amount of the resource is sufficient to operate the machine (1) during the period of time required for the regeneration operation.

6. An agricultural machine according to claim 5 **characterised in that** the resource is a supply of an operating means or the capacity of a crop material container.

7. An agricultural machine according to one of the preceding claims **characterised in that** the operating parameter which is to be kept constant is related to engine load and/or engine speed.

8. An agricultural machine according to one of the preceding claims **characterised in that** the control device (17) is adapted to take account of the temperature of the filter (15) in the selection of a period of time for performing the regeneration operation.

9. An agricultural machine according to one of the preceding claims **characterised in that** it has at least a first and a second consumer (3, 5) driven by the internal combustion engine (2) and the control device is adapted to distribute between the consumers (3, 5) of the machine the power of the internal combustion engine (2), that results from holding the operating parameter constant during the regeneration operation.

10. An agricultural machine according to claim 9 **characterised in that** the first consumer (3) includes a travel drive.

11. An agricultural machine according to claim 9 or claim 10 **characterised in that** the second consumer (5) includes a fan for cooling the engine (2) and/or an overflow valve.

12. An agricultural machine according to claim 9 **characterised in that** the control device is adapted in distribution of the power to the travel drive (3) and the second consumer (5) to take account of on the one hand a desired travel speed and on the other hand a proportionality between the powers required by the travel drive (3) and the second consumer (5) at the desired speed by a procedure whereby if the power to be distributed corresponds at least to the total of said required powers the power required by the travel drive (3) is fed thereto and the remaining power is fed to the second consumer (5) while if the power to be distributed is less than said total the travel drive (3) and the second consumer (5) are respectively fed with the same fraction of the powers respectively required by each.

13. An agricultural machine according to claim 12 **characterised in that** the proportionality is variable.

14. An agricultural machine according to claim 12 **characterised in that** it has means (22) for determining the proportionality during operation.

## Revendications

1. Machine agricole (1) comprenant un moteur à combustion interne (2), un filtre à particules (15) disposé dans une ligne d'échappement (14) du moteur à combustion interne (2), et une unité de commande (16) qui est agencée pour commander une source de chaleur (2) dans une phase de régénération de façon à atteindre dans le filtre à particules (15) une température nécessaire à la régénération de celui-ci et à interrompre une régénération en cours lorsqu'au moins un paramètre d'exploitation de la machine (1) influant sur la régénération s'écarte d'une valeur de consigne, **caractérisée en ce que** la machine (1) comprend un dispositif de commande (17) qui est agencé pour prédire un espace de temps où il sera probablement possible de maintenir le paramètre d'exploitation à sa valeur de consigne et de commencer une régénération au début de cet espace de temps, le dispositif de commande (17) étant couplé à un planificateur d'itinéraire pour prédire l'espace de temps à l'aide d'information reçue par le planificateur d'itinéraire sur les travaux programmés avec la machine.

2. Machine agricole selon la revendication 1, **caractérisée en ce que** la source de chaleur est le moteur à combustion interne (2) et, l'unité de commande (16), une unité de commande de moteur (16).

3. Machine agricole selon la revendication 1 ou 2, **caractérisée en ce que** la valeur de consigne peut être fixée au début de chaque régénération.

4. Machine agricole selon la revendication 3, **caractérisée en ce que** le dispositif de commande (17) est agencé pour recevoir du planificateur d'itinéraire des informations concernant le travail à accomplir sur un trajet à parcourir et la vitesse à adopter sur le trajet.

5. Machine agricole selon une des revendications précédentes, **caractérisée en ce que** le dispositif de commande (17) est agencé pour surveiller au moins une ressource de la machine (1) et pour ne commencer la régénération que lorsque la quantité disponible de la ressource suffit pour faire fonctionner la machine (1) pendant l'espace de temps nécessaire à la régénération.

6. Machine agricole selon la revendication 5, **caractérisée en ce que** la ressource est une réserve de carburant ou la contenance d'une trémie de produit récolté.

7. Machine agricole selon une des revendications précédentes, **caractérisée en ce que** le paramètre d'exploitation à maintenir constant est lié à la charge et/ou à la vitesse de rotation du moteur.

8. Machine agricole selon une des revendications précédentes, **caractérisée en ce que** le dispositif de commande (17) est agencé pour tenir compte de la température du filtre (15) lors du choix d'un espace de temps pour réaliser la régénération.

9. Machine agricole selon une des revendications précédentes, **caractérisée en ce qu'**elle comprend un premier et un second organe utilisateur (3, 5) entraînés par le moteur à combustion interne (2) et **en ce que** le dispositif de commande est agencé pour répartir entre les deux organes utilisateurs (3, 5) de la machine (1) la puissance du moteur à combustion interne (2) résultant du maintien constant du paramètre d'exploitation lors de la régénération.

10. Machine agricole selon la revendication 9, **caractérisée en ce que** le premier organe utilisateur (3) comprend un groupe propulseur.

11. Machine agricole selon la revendication 9 ou 10, **caractérisée en ce que** le second organe utilisateur (5) comprend un ventilateur refroidissant le moteur (2) et/ou une soupape de trop-plein.

12. Machine agricole selon la revendication 9, **caractérisée en ce que** le dispositif de commande est agencé pour, lors de la répartition de la puissance entre le groupe propulseur (3) et le second organe utilisateur (5), tenir compte d'une part d'un souhait de vitesse de marche et d'autre part d'une proportionnalité entre les puissances requises par le groupe propulseur (3) et le second organe utilisateur (5) à la vitesse souhaitée, par le fait que, si la puissance à répartir correspond au moins à la somme de ces puissances requises, on fournit au mécanisme propulseur (3) la puissance dont il a besoin et au second organe utilisateur (5) la puissance restante, tandis que, si la puissance à répartir est inférieure à cette somme, on fournit au mécanisme propulseur (3) et au second organe utilisateur (5) la fraction des puissances requises par chacun d'eux.

13. Machine agricole selon la revendication 12, **caractérisée en ce que** la proportionnalité est variable.

14. Machine agricole selon la revendication 12, **caractérisé en ce qu'**elle comporte des moyens (22) pour déterminer la proportionnalité pendant le fonctionnement.
